# EUROPEAN PATENT SPECIFICATION

(11) **EP 4 013 765 B1**
(45) Date of publication and mention of the grant of the patent: **14.02.2024**
(21) Application number: 20757686.9
(22) Date of filing: 17.08.2020
(51) Int. Cl.: C07G 1/00, C08G 8/00, C08G 64/30

(54) **MULTIFUNCTIONAL CYCLIC ORGANIC CARBONATES AS CURING AGENTS FOR ORGANIC COMPOUNDS HAVING PHENOLIC HYDROXYL GROUPS**
MEHRFUNKTIONELLE CYCLISCHE ORGANISCHE CARBONATE ALS HÄRTUNGSMITTEL FÜR HYDROXYLGRUPPENHALTIGE ORGANISCHE VERBINDUNGEN
CARBONATES ORGANIQUES CYCLIQUES COMME AGENTS RÉTICULANTS POUR DES COMPOSÉS ORGANIQUES AYANT DES GROUPES HYDROXYLES

(30) Priority: 17.08.2019 EP 19192190; 02.09.2019 EP 19195005
(43) Date of publication of application: 22.06.2022
(73) Proprietor: Prefere Resins Holding GmbH, 15537 Erkner (DE)
(72) Inventor: BORNHOLDT, Nick, 20253 Hamburg (DE); LEHNEN, Ralph, 21465 Reinbek (DE); DÜCK, Klaus, 15732 Schulzendorf (DE); FLIEDNER, Elke, 12527 Berlin (DE)
(74) Representative: Deckers, Hellmuth Alexander
(86) International application number: PCT/IB2020/057735
(87) International publication number: WO 2021/033129

(56) References cited:
- ME JAZI ET AL: "Synthesis and Applications of Isocyanate Free Polyurethane Materials", GLOBAL JOURNAL OF SCIENCE FRONTIER RESEARCH: B CHEMISTRY, vol. 16, no. 3, 21 January 2016 (2016-01-21), pages 1-21, XP055544302, Bognor Regis

## Description

### Field of the Invention

The invention relates to a curable mixture comprising at least one organic compound having phenolic hydroxyl groups and at least one multifunctional cyclic organic carbonate as curing agent, to a method of curing the said organic compound having phenolic hydroxyl groups with at least one multifunctional cyclic organic carbonate, and to binders for coating compositions, adhesive compositions, or filler compositions comprising at least one organic compound having phenolic hydroxyl groups and at least one multifunctional cyclic organic carbonate.

### Background of the Invention

Novolaks and also lignin which are organic compounds having phenolic hydroxyl groups are usually cured with curing or crosslinking agents that include formaldehyde or compounds that split off formaldehyde such as trioxane, paraformaldehyde, hexamethylenetetramine and also resoles that can also serve as formaldehyde donors. Other known crosslinkers or hardeners are bisoxazolines, benzoxazines and oxazolidines, see L. Pilato, "Phenolic Resins: A Century of Progress", Heidelberg, 2010. Novolaks can also be cured with triazine hardeners prepared from melamine or benzoguanamine and formaldehyde using a ratio of the amount of substance of formaldehyde, n(FA), and the amount of substance of triazine, n(T), n(FA)/n(T) of at least 4 mol/mol. See "Reactive Polymers - Fundamentals and Applications", J.K.Fink, Norwich, NY, 2005,p. 263. Diisocyanates can also be used for crosslinking of novolaks, see, e.g., A. Tejado et al., "Isocyanate Curing of Novolak-Type Ligno-Phenol-Formaldehyde Resins", Industrial Crops and Products 27 (2008), pp. 208 to 213. Epoxides having a functionality of at least two can also be used as curing agent.

Reactions of cyclic organic carbonates with phenols have been described, i. a. in "Reactive Applications of Cyclic Alkylene Carbonates" by John H. Clements, Ind. Eng. Chem. Res. 2003, 42, pp. 663 to 674. The cyclic alkylene carbonates are used to alkylate active hydrogen-containing phenols and phenol derivatives, as disclosed in US patents 4,261,922 A and 5,679,871. A.

Mixed reaction products of phenol, triethanolamine, propylene carbonate and imidazole have been described in CN 106589320 A as curing agents for epoxy resins. Propylene carbonate has been described as a hardener for a composition comprising a fire resistant filler and an aqueous solution of an alkali metal silicate as binder in DE 2710536 A1. Crosslinked copolymers have been known from US 4,767,620 A which are produced from monomers containing glycerol carbonate groups, crosslinking monomers and optionally other monoethylenically unsaturated monomers, the copolymers forming principally spherical porous particles which are suitable as carrier materials for the immobilisation of biologically active substances. Foundry sand compositions have been described in EP 0 041 774 A1 which comprise particulate sand, aqueous sodium silicate as binder and an alkylene carbonate as hardener. In EP 0 146 499 A2, phenolic resin foams are described which are prepared from a mixture of a phenolic resole, and alkali and a lactone, an ester or a cyclic aliphatic carbonate, curing the phenolic resoles under alkaline conditions, and foaming this mixture by introducing air or incorporating a readily volatile liquid blowing agent, and allowing the foam to cure. In EP 0 149 156 A2, a process for curing compositions is disclosed which comprises an active hydrogen-containing material which is selected from the group consisting of epoxy polymers, acrylic polymers, polyurethanes, and polyesters, and a curing agent which has the structure of a blocked isocyanate, but instead of the common case of a reaction product of a diisocyanate and two molecules of a blocking agent, this is a reaction product of a polyfunctional amine and two molecules of an organic carbonate. In EP 0 905 208 A1, corresponding to US 5,961,802 A, US 5,994,469 A, and US 6,184,273 B1, a composition is described which comprises a resin having latent primary amine functionality, obtained by reacting a cyclic anhydride with an amine compound having two primary amine groups and one secondary amine group. This latent amine compound is combined with a compound or resin having a plurality of cyclic carbonate groups in a crosslinkable coating composition. The multifunctional cyclocarbonate compounds can be obtained from multifunctional epoxides by reaction thereof with carbon dioxide under pressure, or with dialkyl or diaryl carbonates. There is no mention or suggestion of combining multifunctional cyclocarbonate compounds with novolaks. In FR 2 382 290 A1, self-curing moulding compositions for casting moulds and cores are described which consist of a fire-resistant filler, an aqueous solution of an alkali metal silicate as binder, and propylene carbonate as hardener. In FR 2 497 788 A1, solid silicate foams are described which are produced from a composition which contains an alkali metal silicate, a foaming agent, ethylene carbonate as a hardener and water. In GB 900 506 A, hardenable compositions are disclosed which comprise bis-carbonates made from bis-epoxidised dehydronorborneol and one or more hardeners therefor which are amines or amides, such as mono-, di- and tributylamine, p-phenylenediamine, bis(p-aminophenyl)methane, ethylenediamine, N,N-diethylethylene-diamine, diethylenetriamine, tetra(hydroxyethyl)diethylene-triamine, triethylenetetramine, tetraethylenepentamine, trimethylamine, diethylamine, triethanolamine, Mannich bases, piperidine, guanidine, phenyl guanidine and diphenyl guanidine, dicyandiamide, aniline-formaldehyde resins, polymers of aminostyrenes, polyamides e.g. from aliphatic polyamines and dimerised or trimerised unsaturated fatty acids, isocyanates, isothiocyanates, resorcinol, hydroquinone, bis(4-hydroxyphenyl)dimethylmethane, and quinone, phenol-aldehyde resins, oil-modified phenol-aldehyde resins, reaction products of aluminium alkoxides or phenolates with tautomeric reacting compounds of the acetoacetic ester type, Friedel-Crafts catalysts such as AlCl₃, SbCl₅, SnCl₄, ZnCl₂, BF₃ and their complexes with organic compounds, and phosphoric acid. In JP 2002-137201 A, a method for forming plywood is disclosed wherein an alkali catalysed phenolic resin is used as an adhesive while problems in quality such as a warp and undulation are solved by using an adhesive in which sodium bicarbonate and ethylene carbonate as a hardening accelerator are added to the alkali catalysed phenolic resin and an alkali catalysed phenolic resin is used which has been modified by incorporation of resorcinol or aminophenol. In JP 2002-236 364 A, a negative type resist composition for electron beam or X-rays is disclosed which contains a crosslinker which causes a crosslinking reaction under the action of an acid and a mixed solvent containing at least one propylene glycol monoalkyl ether carboxylate, at least one solvent selected from the group consisting of propyleneglycol monoalkyl ethers, alkyl lactates, and alkyl alkoxypropionates, and at least one of γ-butyrolactone, ethylene carbonate, and propylene carbonate. The crosslinker is preferably a partially etherified resole derived from alkylphenols. In JP Hei 04-37436 A, an inorganic self-curing moulding sand is disclosed which contains refractory particles of silica sand, sodium silicate as inorganic binder, propylene carbonate as curing agent and 1,2-butanediol diacetate or ethylene carbonate as curing adjustor. In JP Sho55-3450 A, a soil stabiliser is described which comprises an aqueous solution of sodium silicate as main component, and dimethyl carbonate as a curing agent, the stabiliser solution being impregnated into the soil, and hardened to stabilise the soil. In WO 2013/124 251 A2 (corresponding to US 9,193,862 B2 and EP 2817349 B1), a resin blend for composites for use in rotor blades of wind turbines is disclosed which comprises an epoxy resin, a cyclic carbonate and a hardener containing a polyalkoxypolyamine, an additional amine and a catalyst. In US 6,048,443 A, cathodic electrocoat compositions are disclosed which comprise a carbamate functional resin (a) with a cationic salting site, a crosslinking agent (b) reactive with the carbamate functional resin, and a carbonate curing agent (c) having a plurality of cyclocarbonate groups. The reactive groups of the crosslinking agent (b) include methylol - CH₂-OH or methylalkoxy groups -CHz-O-Alk of aminoplast crosslinking agents or phenol-formaldehyde resins, isocyanate groups, siloxane groups, cyclocarbonate groups or acid anhydride groups. In WO 2006/002 814 A1, substantially spherical nanosponges are described which can be obtained by crosslinking cyclodextrins and their by-products with organic carbonates as crosslinkers and ultrasound treatment without a solvent; the organic carbonates are dicarbonates, and preferably, diphenyl carbonate. None of these references disclose crosslinking of phenolic resins, or of polymers which have phenolic hydroxyl groups.

### Object of the Invention

As the addition of formaldehyde to phenolic bodies is an equilibrium reaction, gaseous formaldehyde can be split off formaldehyde-cured phenolic resins or other phenolic bodies. It has been the object of the present invention to provide curing agents that react with phenolic hydroxyl groups under formation of chemical bonds to form crosslinked materials that have no propensity to split off formaldehyde.

### Summary of the Invention

This object has been realised by using multifunctional cyclic carbonates C as curing agents for organic compounds O having phenolic hydroxyl groups. These multifunctional cyclic carbonates C can be used to crosslink novolaks N, tannins T and also biopolymers such as lignin L which all have phenolic hydroxyl groups, and the latter also has aliphatic hydroxyl groups which are derived from the phenylpropanoid monomers p-coumarylalcohol, coniferylalcohol and sinapylalcohol that are the precursors in the dehydrogenative polymerisation that leads to lignin formation in woody plants. The terms "cyclocarbonate" and "cyclic carbonate" are used interchangeably.

### Detailed Description of Preferred Embodiments

The multifunctional cyclic carbonates C according to the invention have at least two, and preferably from two to twelve, particularly preferably, from two to six, cyclocarbonate structures in their molecules. A cyclocarbonate structure obeys the formula I 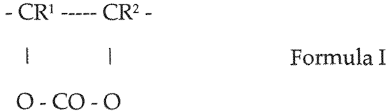 where R¹ and R² are independently of each other selected from the group consisting of H and alkyl groups having at least one carbon atom, preferably from one to six carbon atoms. They can be formed by insertion of carbon dioxide into multifunctional epoxides E having at least two epoxide groups per molecule, or by reaction of vicinal diols D having at least two sets of vicinal diol groups, with a dialkyl carbonate or a monofunctional cyclocarbonate such as ethylenecarbonate (1,3-dioxolan-2-one) or propylenecarbonate (4-methyl-1,3-dioxolan-2-one). Multifunctional epoxides E are preferably selected from low molar mass epoxide resins that have specific amounts of epoxide groups of from 0.2 mol/kg to 5.4 mol/kg, preferably novolak epoxy resins which may have average degrees of polymerisation which is equal to the average number of epoxide groups per molecule, of from 2.0 to 5.0, and preferably, a specific amount of epoxide groups of 4.5 mol/kg to 6 mol/kg. In these novolak epoxy resins, usually all phenolic hydroxyl groups have been converted to epoxide groups by reaction of the novolak with epichlorohydrin. Other multifunctional epoxides can be prepared by epoxidation of polyolefins which comprise residual carbon-carbon double bonds, preferably polymers made from alkadienes such as polybutadiene or polyisoprene, or copolymers made from alkenes and alkadienes such as ethylene-butadiene, ethylene-propylene-1,4-hexadiene, or styrene-butadiene copolymers. In these polymers and copolymers, reaction of olefinic unsaturations to epoxides is preferably made only partially. It is also possible to use epoxidised vegetable oils, such as epoxidised soy bean oil or epoxidised linseed oil. All these multifunctional epoxides can be converted to multifunctional carbonates C by insertion of carbon dioxide, preferably in the presence of a catalyst.

A further source of multifunctional epoxides are ethers of multifunctional alcohols and glycidol, which are reacted with carbon dioxide in the known way to produce the multifunctional cyclocarbonates. Examples of these multifunctional cyclocarbonates made by insertion of carbon dioxide into glycidylethers of polyoxyethylene glycol having a degree of polymerisation from three to one hundred and fifty, the corresponding polyoxypropylene glycols, and random or block copolymers of these, polyoxybutylene glycols, as well as low molar mass polyols such as trimethylol ethane, trimethylol propane, trimethylolbutane, erythritol, pentaerythritol, and ditrimethylol ethane, ditrimethylol propane, ditrimethylol-butane, dierythritol, and dipentaerythritol.

A further preferred multifunctional cyclocarbonate can be formed from lignin L where both phenolic hydroxyl groups and aliphatic hydroxyl groups are first converted to oxalkylated derivatives by reaction thereof with glycerol carbonate to create aliphatic vicinal 1,2-diol structures, which diols D are then converted to cyclocarbonates by reaction thereof with linear carbonates such as dimethylcarbonate or diethylcarbonate, or by transesterification with cyclocarbonates such as ethylenecarbonate or propylenecarbonate. Kraft lignin, soda lignin, sulphite lignin, or the so-called organosolv lignin which latter is free from sulphur are preferably used in these reactions.

Other multifunctional cyclocarbonates can also be formed from tannins T. Tannins are a class of polyphenolic compounds that share a property, viz. binding to, and precipitation of, proteins and other classes of organic compounds such as amino acids and alkaloids. Their molar mass ranges from about 500 g/mol for esters of sugars and gallic or digallic acid, to about 20 kg/mol for proanthocyanidines. Basic chemical structures are derived from gallic acid (3,4,5-tri-hydroxybenzoic acid), 1,3,5-trihydroxybenzene (phloroglucinol), and flavan-3-ol. Naturally occurring tannins are found in leaf, bud, seed, root, and stem tissues. A structural differentiation for tannins has been proposed by Khanbabee and van Ree in Natural Product Reports 2001, vol. 18, pages 641 to 649, as Gallotannins, Ellagitannins, Complex Tannins and Condensed Tannins. Gallotannins are ester of gallic acid or its depsidic derivatives with (mostly sugar-based, catechin-based or terpenoid-based) polyols, Ellagitannins comprise acidic components based on ellagic acid (2,3,7,8-tetrahydroxy-chromeno{5,4,3,c,d,e]chromene-5,10-dione) and do not contain glycosidically linked catechin units, Complex Tannins are those in which a catechin unit is bound glycosidically to a gallotannin or ellagitannin unit, and Condensed Tannins are all oligomeric and polymeric proanthocyanidines formed via linkage of the C4-atom of one catechin unit with a C8- or C6-atom of the next monomeric catechin unit. The sugar-based polyols include, i.a., D-gluco-pyranose, D-hamamelose, sucrose, shikimic acid, and quercitols. They all comprise both phenolic and cycloaliphatic hydroxyl groups. Naturally occurring tannins are usually mixtures of at least two of these four classes. Like in lignins, their phenolic hydroxyl groups, and also aliphatic hydroxyl groups, can be converted to cyclocarbonates by reaction with glycerolcarbonate to form bis-hydroxyethyl derivatives that are cyclised in the following step by reaction with a linear or branched dialkylcarbonate or a cyclic alkylenecarbonate to form multifunctional cyclocarbonates.

In the same way, also novolaks can be converted under consumption of at least two of their phenolic hydroxyl groups to multifunctional cyclocarbonates by reaction of novolaks with glycerol cyclocarbonate to form bishydroxyalkyl novolaks in the first step, which hydroxyalkyl novolaks are then transesterified in a second step with further linear or cyclic carbonate to form a multifunctional novolak cyclocarbonate.

It is also possible to use 1,3-diols to form cyclocarbonates C6 that have six ring atoms in the cyclocarbonate structure (1,3-dioxane-2-ones), as depicted in Formula II 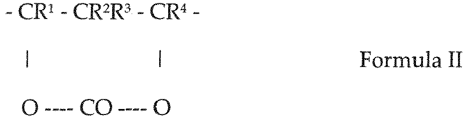 where each of R¹, R², R³ and R⁴ is independently selected from the group consisting of H and alkyl groups having from one to six carbon atoms.

The novolaks N which can be used in the invention are low molar mass polymers derived from phenol or alkylphenols, where the alkyl groups have from one to twenty carbon atoms, or mixtures of both wherein preferably, phenol and at least one alkylphenol are present in the mixture, and formaldehyde. The alkyl group is linear or branched. The novolaks N usually have a dropping temperature of up to 150 °C, as determined according to ASTM D566, and preferably, a number average molar mass *M*ₙ of up to 2000 g/mol. This temperature, also referred to as "dropping point", is also determined according to the method described in DIN EN ISO 2176:1995 (published 1997-05) "Petroleum Products - Lubricating Grease - Determination of Dropping Point".

Crosslinked novolaks made by crosslinking novolaks N with multifunctional cyclocarbonates C or C6, or mixtures of both, can be used in all common applications such as adhesives and bonding, laminates, plywood and other composite wood products such as particle board, wafer board, fibre board and strand board, moulding compositions, protective coatings, in insulation materials, foundry and shell moulding materials, with preference in the following applications: as binders for abrasives, friction materials, mineral or stone fibres, refractories, textile felts, or as impregnation resins for paper, wood, fabricated wood, tissue and woven material.

Crosslinking is preferably effected by mixing the novolak N and the multifunctional cyclocarbonates C or C6, or mixtures of both, in mass ratios *m*_{N}/(*m*_{C} + *m*_{C*6*}) of from 0.1 to 10, preferably from 0.3 to 3, and most preferred, from 0.4 to 2.5, where *m*_{N} is the mass of the novolak N, and *m*_{C} + *m*_{C6} is the sum of the masses of the multifunctional cyclocarbonates C and C6 used.

Crosslinked lignins made by crosslinking lignin L with multifunctional cyclocarbonates C or C6, or mixtures of both, can be used used in all applications mentioned supra, preferably in the following applications: adhesives, impregnation resins for paper, wood, fabricated wood, tissue and woven material, and as binders for abrasives, friction materials, mineral or stone fibres, refractories, and textile felts.

Crosslinking is preferably effected by mixing the lignin L and the multifunctional cyclocarbonates C or C6, or mixtures of both, in mass ratios *m*_{L}/(*m*_{C} + *m*_{C6}) of from 0.1 to 10, preferably from 0.3 to 3, and most preferred, from 0.4 to 2.5, where *m*_{L} is the mass of the lignin L, and *m*_{C} + *m*_{C6} is the sum of the masses of the multifunctional cyclocarbonates C and C6 used.

With preference, combinations of novolaks and lignin or tannin or both can be made by mixing of these materials, or by including lignin and/or tannin in the synthesis of a novolak by replacing at least a part of the phenol in the synthesis of a novolak, thus leading to lignin-modified novolaks or tannin-modified novolaks, or novolaks modified by both lignin and tannin. These modified novolaks or mixtures can be crosslinked in the same way with the multifunctional cyclocarbonates C or C6, or mixtures of both, as described supra.

The combination of lignin L as hydroxyfunctional organic compound with a curing agent which is a cyclocarbonate made from lignin is particularly preferred, as the similarity of both constituents leads to a homogeneous mixture of both constituents which facilitates the curing reaction. In the same way, the combination of a novolac resin with a multifunctional cyclocarbonate made from a novolak by reaction thereof with a monofunctional cyclocarbonate to form a hydroxyalkylated novolak which can then be reacted with a further dialkyl carbonate or alkylene carbonate to form a cyclocarbonated novolak has the same advantage of forming a homogeneous mixture of resin and curing agent. These two embodiments are therefore a preferred way of application of the inventive idea to a practical solution.

By using different chemical species as crosslinking agent, and as compound to be crosslinked, micro-heterogeneities can be created that impart a two-phase structure to the resulting crosslinked material that leads to improved toughness properties. Examples for formation of two-phase materials is a novolak that is crosslinked with a purely aliphatic multifunctional cyclocarbonate, such as those derived from epoxidised fatty oils, from dimer fatty acids such as those described in He, X. et al., Polymers 2018, 10, p. 262 et seq., and from epoxidised polydienes.

The organic compounds having phenolic hydroxyl groups that are cured or crosslinked with the multifunctional cyclic carbonates can also include low to intermediate molar mass compounds such as tannin T as mentioned supra, as tannin has also phenolic hydroxyl groups which easily react with cyclocarbonates under ring opening.

The invention is illustrated by the following examples which are not to be construed as limiting the scope of the invention.

### Examples

Lignins: Organosolv lignin was produced using a mixture of masses of 1 kg each of ethanol and of water in pulping of 0.5 kg of beech wood chips (OL) with a liquor to biomass mass ratio of 4:1, with an addition of 10 g of H₂SO₄ (0.5 % of the mass of the solvent mixture). The technical lignins from Kraft pulping processes were obtained from Suzano (spruce/pine, KL), the soda lignin (wheat straw, SL) was purchased from Green Value, and sulphite lignin was purchased from Tembec. The organosolv lignin was used if not mentioned otherwise.

Tannin: Acacia mearnsii (Black wattle), obtained from Christian D. Markmann GmbH, Hamburg, Germany.

Novolaks: products having three different dropping points (*T*_{D} = 114 °C; 128 °C; and 135 °C as measured according to DIN ISO 2176) have been used in the experiments. The values cited in the examples apply to a novolak of *T*_{D} = 114 °C, obtained from Prefere Resins Germany GmbH as "Novolak DP 114" unless stated differently.

Multifunctional cyclic carbonates: The multifunctional cyclic carbonates (e.g. poly(ethyleneglycol) dipropylene carbonate) were synthesised by a base catalysed one step reaction from the corresponding epoxides (in this case, poly(ethyleneglycol) diglycidyl ether) and CO₂. The epoxides were obtained from Sigma Aldrich, Alfa Aesar and HOBUM Oleochemicals, and the catalysts (tetra-n-butylammoniumbromide and 1,8-diazabicyclo-[5.4.0]undec-7-ene) were purchased from Sigma Aldrich and Alfa Aesar.

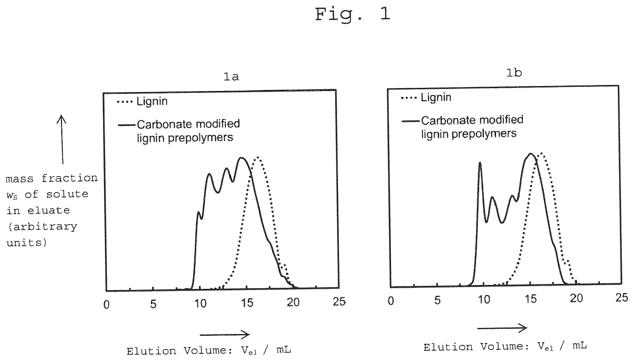

The experimental results are also illustrated in the figures, wherein
Fig. 1 shows elugrams from a size-exclusion chromatographic analysis where the elugrams of pure lignin (the reactant) and a polymer formed by reaction of lignin with the multifunctional cyclocarbonates BCC (difunctional; Fig. 1a) and TCC (trifunctional; Fig. 1b), catalysed by DBU, at 170 °C, and a 12 h-reaction time are compared; the larger molecules formed in the reaction eluting before the smaller lignin molecules. In these elugrams of Example 22, the detector signal (usually based on refractive index, or visible light or UV absorption which signals are proportional to the mass fraction of the detected substance in the eluate) is plotted against the volume *V*_{c} of the eluate. The dotted line represents the elugram of the lignin used, while the solid line represents the elugram of a reaction product of lignin with a bis-carbonate (Fig. 1a, BCC, see Example 16 infra) and a tris-carbonate (Fig. 1b, TCC, see Example 17 infra), catalysed with DBU (see infra), both reacted at 170 °C for 12 h. Dimethylsulfoxide with addition of lithium bromide in a mass frcation of 1% was used as eluent with a polymer standard service (PSS) column set PolarGel-M^{®} (7.5 x 300 mm) and a guard column (8 x 50 mm). The flow rate was 0.5 mL/min at 60 °C. 10 mg of the lignin and polymer samples were dissolved with a concentration of 1 mg/ml and shaken in the eluent for 24 h at room temperature. Detection was made using an RI detector (RI-71, Showa Dcnko) and an UV detector (UV-2077+, Jasco).

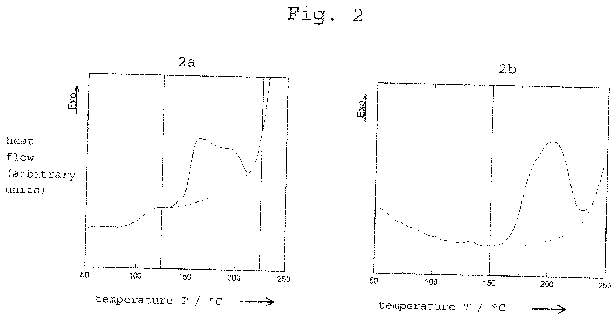

Fig. 2 shows the thermal behaviour of mixtures of multifunctional cyclic carbonates, novolak (2 b) or lignin (2a), BCC and catalyst (DBU) of examples 8 and 10. The lower line shows the base line. The upper curve which, of course, is not reversible, shows the exotherm heat flow during the curing reaction. In these graphs, the reaction of multifunctional cyclic carbonates with novolak and lignin was examined thermoanalytically by temperature-modulated differential scanning calorimetry (DSC-TOPEM^{®}). The samples were measured with a multifrequency temperature modulation technique at a heating rate of 2 K/min from 50 °C to 250 °C in a N₂ atmosphere. It was found that, depending on the mixture composition, novolak and lignin react with the multifunctional cyclic carbonates in an exothermic crosslinking reaction in a temperature range from about 150 °C to 240 °C. The exemplary thermograms show the corresponding exothermic and non-reversing signals. In further experiments, it was also shown that the crosslinking temperature depends on the amount of catalyst. The more DBU was added to the mixture (in an amount of substance-ratio n(DBU)/n(cyclocarbonate groups) between 0 mol/mol to 0.1 mol/mol), the lower the corresponding crosslinking temperature and the higher the intensity of the exothermic and non-reversing signals in the thermogram.

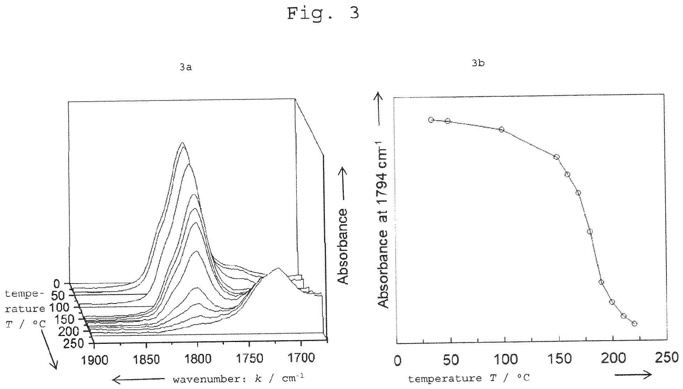

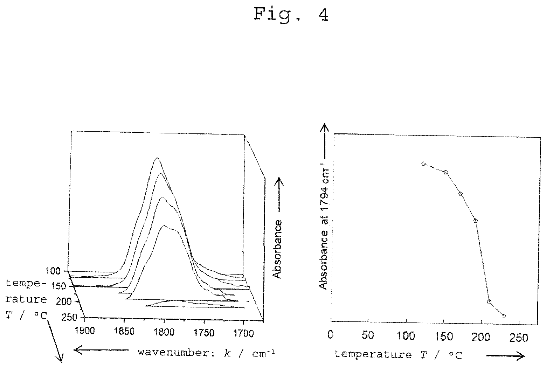

Figures 3 and 4 illustrate FTIR spectroscopic investigations of the crosslinking reaction with multifunctional cyclic carbonates. The conversion of the cyclic carbonate function by ring opening and COz evolution during the crosslinking reaction was monitored by FTIR spectroscopy. In these figures, the intensity of the FTIR signal at approximately 1794 cm⁻¹ which is caused by the C=O stretching mode of the cyclic carbonate function, was examined as a function of the reaction temperature in a range of from 25 °C (room temperature, "RT") up to 250 °C. Mixtures of lignin, multifunctional cyclic carbonates (in mass ratios of 1:1) and catalyst were each heated for one hour at different temperatures. The obtained FTIR spectra were plotted against the reaction temperature (Figure 3a, left). It can be seen that the intensity of the carbonate band decreases with increasing reaction temperature. Accordingly, a conversion of the carbonate function can be assumed. The FTIR absorbance at 1794 cm⁻¹ has been plotted against the reaction temperature (Figure 3b, right). The absorbance decreases from a temperature of about 150 °C and reaches a plateau at about 220 °C. It can be assumed that a crosslinking reaction takes place in this temperature range and the ring opening proceeds faster at higher temperatures under the given conditions.
   Corresponding experiments with mixtures of novolaks, multifunctional cyclic carbonates (in a mass ratio of 1:1) and catalyst showed similar results (Figures 4a and 4b).

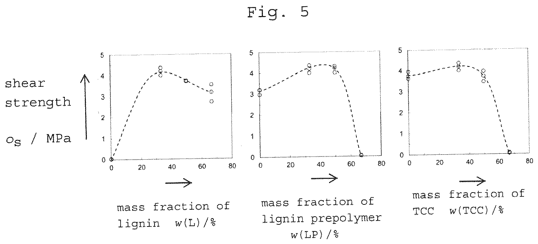

   In Figures 5 to 9, results of adhesion tests have been illustrated. The shear strength *σ*ₛ was determined by Automated Bonding Evaluation System ("ABES"). Beech veneer strips had been conditioned in a standardised climate (25 °C, 65 % relative air humidity) and were coated with adhesive in an areic density of 100 g/m². The veneers were then pressed at 150 °C for nine minutes (540 s). A standard phenolic resin was used as reference.
Fig: 5 shows examples of ABES tests with mixtures of lignin, lignin prepolymer and TCC in different mixing ratios. Shear strengths of about 4 MPa (4 N/mm²) have been obtained with a mass ratio of the said components of approximately 1:1:1.

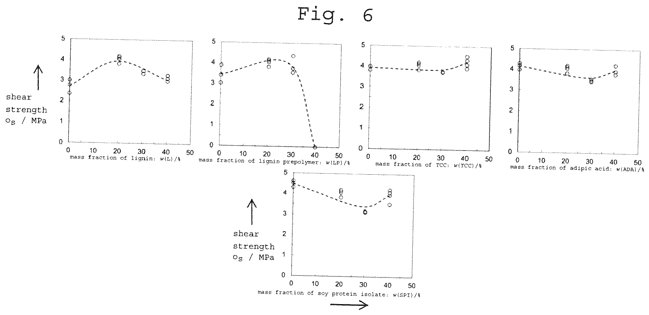

Fig. 6 shows the ABES test results obtained for mixtures of lignin prepolymer, lignin, TCC, adipic acid and soy protein isolate in different mixing ratios. Shear strengths of about 4 MPa (4 N/mm²) were obtained with a mass fraction of lignin prepolymer between 20 % and 30 %. Furthermore, it was found that the addition of soy protein isolate or of adipic acid in a mass fraction of up to 20 % in the mixture, respectively, does not lead to a significant reduction or to an enhancement of the adhesion under the given conditions, measured by the shear strength *σ*ₛ.

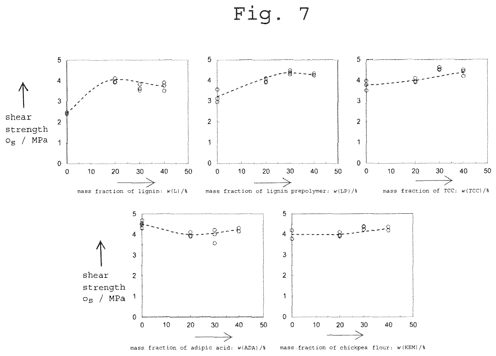

Fig. 7 shows the ABES test results of a further test series where the shear strength *σ*ₛ of different mixtures containing lignin prepolymer, lignin, TCC, adipic acid, and chickpea flour ("KEM") were examined. Mixtures with a mass fraction *w*(LP) of lignin prepolymer of from appoximately 20 % to 40 %, a mass fraction w(L) of lignin of approximately 20 %, and a mass fraction w(TCC) of TCC of approximately from 30 % to 40 % led to shear strength *σ*ₛ of more than 4 MPa (4 N/mm²). The addition of KEM or adipic acid in a mass fraction of up to 40 %, respectively, did not increase or decrease the adhesion significantly under the given conditions, measured by the shear strength *σ*ₛ.

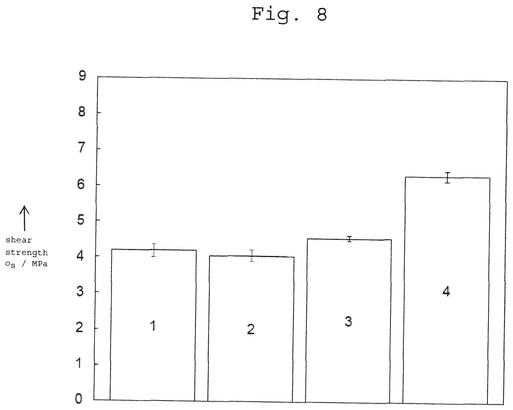

Fig. 8 provides a comparison of the shear strength *σ*ₛ measured in the ABES tests for the optimum compositions from the tests in Fig.s 6 and 7 using:
   - lignin L, lignin prepolymer LP, and TCC (leftmost bar 1),
   - lignin L, lignin prepolymer LP, TCC, adipic acid ADA, and chickpea flour KEM (second bar 2),
   - lignin L, lignin prepolymer LP, and TCC (leftmost bar), adipic acid ADA, and soybean protein isolate SPI (third bar 3), and
   - a reference which is a phenolic resin (novolak DP 114 cured with hexamethylene tetramine, rightmost bar 4).

   Adipic acid was always added in the form of an aqueous solution (mass *m*(ADA) of adipic acid in a volume V of solution: the mass concentration *β*(ADA) is approximately 28 g/L at 25 °C).

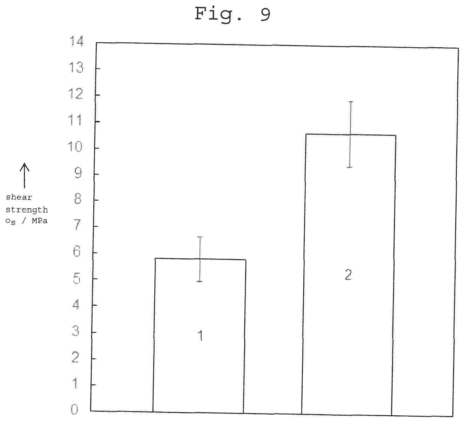

Fig. 9 shows the results of determination of the longitudinal tensile shear strength test according to DIN EN 302-1, where beech wood panels with a length of 340 mm, a width of 150 mm, and a thickness of 5 mm were conditioned in a standardised climate (25 °C, 65 % relative air humidity), and bonded with adhesive mixtures applied in an areic density of 150 g/m² at a pressure of 0.3 MPa and at a temperature of 180 °C for 60 min. After storage for seven days in the standardised climate, test specimens with a size of 150 x 20 mm² were cut. The shear strength *σ*ₛ was measured using a Zwick Z050 testing machine with a speed of 4 mm/min.

The shear strength of mixtures of lignin prepolymer LP, unmodified lignin L, and cyclic carbonate TCC with a mass mixing ratio of approx. 1:1:1 in the mixture reached approximately 6 MPa (6 N/mm²; left bar 1). For the reference sample using a standard phenolic resin (novolak DP 114 cured with hexamethylene tetramine, right bar 2), a value of approximately 11 MPa (11 N/mm²) was found.

Standard deviations found for these results depicted in Fig.s 8 and 9 are indicated as "I" intervals in these bars.

### Example 1

In a series of experiments, the mass ratios of the constituents in a mixture of novolak, poly(ethyleneglycol) dipropylene carbonate (having a number average molar mass of ca. 400 g/mol, nonaethylene glycol, diether with glycerol-1,2-carbonate, "BCC") and 1,8-diazabicyclo[5.4.0]undec-7-ene ("DBU") were varied (from 1.0 g to 5.0 g of novolak, from 1.0 g to 5.0 g of BCC, and from 0 g to 0.1 g of DBU). The mixtures were cured by heating to 190 °C for 1 h. The obtained products showed very low solubility in water, ethanol and acetone. Further details can be found in tables 2, 3, 4, and 5.

### Example 2

In a series of experiments, the mass ratios of the constituents in a mixture of novolak, trimethylolpropane tripropylenecarbonate (trimethylolpropane, triether with glycerol-1,2-carbonate, "TCC") and DBU were varied (from 1.0 g to 5.0 g of novolak, from 1.0 g to 5.0 g of TCC, and from 0 g to 0.15 g of DBU). The mixtures were cured by heating to 190 °C for 1 h. It could be shown that mixtures with mass fractions of TCC of from 40 % to 70 %, of novolak of from 30 % to 60 %, and of DBU of from 0.1 % to 10 % are particularly suitable for the crosslinking reaction. The obtained products showed very low solubility in water, ethanol and acetone. Further details can be found in tables 2, 3, 4, and 5.

### Example 3

In a series of experiments, the mass ratios of the constituents in a mixture of novolak, carbonated soybean oil (made from epoxidised soy bean oil by converting the epoxide rings to cyclocarbonate, having approximately six carbonate groups per molecule, "CSBO") and DBU were varied (from 1.0 g to 5.0 g of novolak, from 1.0 g to 5.0 g of CSBO, and from 0 g to 0.1 g of DBU). The mixtures were cured by heating to 190 °C for 1 h. It could be shown that mixtures with mass fractions of CSBO of from 50 % to 70 %, of novolak of from 30 % to 50 %, and of DBU of from 0.1 % to 10 % are particularly suitable for the crosslinking reaction. The obtained products showed very low solubility in water, ethanol and acetone. Further details can be found in tables 2, 3, 4, and 5.

### Example 4

A mixture of 0.83 g of novolak, 1.3 g of TCC, and 0.15 g of DBU was completely cured by heating to 190 °C for 1 h. The adhesive strength was determined by different methods including screen tests and tensile shear strength tests. The tests showed very good results. Further details can be found in tables 3, 4, and 5, and in figures 5, 6, 7, and 8.

### Example 5

A mixture of 0.90 g of novolak, 1.1 g of BCC, and 0.15 g of DBU was completely cured by heating to 190 °C for 1 h. Adhesive strength tests with corresponding mixtures showed very good results. Further details can be found in tables 3, 4, and 5, and in figures 5, 6, 7, and 8.

### Example 6

A mixture of 0.90 g of novolak, 1.2 g of CSBO, and 0.15 g of DBU was completely cured at 190 °C for 1 h. Adhesive strength tests with corresponding mixtures showed good results. Adhesive strength tests with corresponding mixtures showed very good results. Further details can be found in tables 3, 4, and 5, and in figures 5, 6, 7, and 8.

### Example 7

A mixture of 0.80 g of novolak, 1.2 g of TCC, and 0.05 g of DBU was completely cured by heating to 190 °C for 1 h. Adhesive strength tests with corresponding mixtures showed good results. Further details can be found in tables 3, 4, and 5, and in figures 5, 6, 7, and 8.

### Example 8

A mixture of 1.0 g of novolak, 1.0 g of BCC, and 0.05 g of DBU was completely cured by heating to 190 °C for 1 h. Adhesive strength tests with corresponding mixtures showed good results. Further details can be found in tables 3, 4, and 5, and in figures 5, 6, 7, and 8.

### Examples with lignin and multifunctional cyclic carbonates

### Example 9

A mixture of 3.0 g of lignin, 1.5 g of poly(ethyleneglycol) dipropylenecarbonate and 0.1 g of DBU was stirred at 170 °C for 8 h. The product mixture was washed several times with dimethyl sulfoxide ("DMSO") as well as water and dried in a vacuum oven at 30 °C. The yield of the obtained polymer product was 77 % (3.45 g).

### Example 10

A mixture of 0.75 g of lignin, 1.5 g of poly(ethyleneglycol) dipropylenecarbonate and 0.05 g of DBU was stirred at 170 °C for 5 h. The product mixture was washed several times with DMSO as well as water and dried in a vacuum oven at 30 °C. The yield of the obtained polymer product was 66 % (1.48 g).

### Example 11

A mixture of 0.77 g of lignin, 1.6 g of carbonated soybean oil and 0.05 g of DBU was stirred at 170 °C for 8 h. The product mixture was washed several times with DMSO as well as water and dried in a vacuum oven at 30 °C. The yield of the obtained polymer product was 21 % (0.50 g).

### Example 12

In a series of experiments, the amount of CSBO was varied from 0.2 g to 1.0 g in a mixture of 1.0 g of lignin and 1.3 g of water. The mixtures were cured by heating to 150 °C for 3 min. Adhesive strength tests with corresponding mixtures showed good results. Further details can be found in tables 3, 4, and 5, and in figures 5, 6, 7, and 8.

### Example 13

In a series of experiments, the amount of DBU was varied from 0 g to 0.35 g in a mixture of 1.0 g of lignin, 1.0 g of CSBO, and 1.3 g of water. The mixtures were cured by heating to 150 °C for 3 min. Adhesive strength tests with corresponding mixtures showed good results. Further details can be found in tables 3, 4, and 5, and in figures 5, 6, 7, and 8.

### Example 14

A mixture of 2.0 g of lignin, 1.0 g of TTC, and 3.5 g of water was completely cured at 150 °C for 3 min. Adhesive strength tests with corresponding mixtures showed good results. Further details can be found in tables 3, 4, and 5, and in figures 5, 6, 7, and 8.

### Example 15

A mixture of 1.0 g of lignin, 1.5 g of TTC, and 0.4 g of DBU was completely cured at 190 °C for 30 min. Adhesive strength tests with corresponding mixtures showed good results. Further details can be found in tables 3, 4, and 5, and in figures 5, 6, 7, and 8.

### Examples of single step syntheses of carbonate modified lignin prepolymers

### Example 16

A mixture of 30.0 g of lignin, 203 g of BCC, and 1.00 g of DBU was stirred at 170 °C for 12 h. This single step reaction led to a highly viscous fluid. Size Exclusion Chromatography ("SEC") elugrams showed that the molar mass of the product thus obtained (solid line) is a multiple of the molar mass of the used lignin (dotted line; see SEC elugram in Fig. 1a). FTIR analyses showed that the product contained multiple cyclic carbonate functionalities. Therefore, it is suitable as prepolymer for further reactions.

### Example 17

A mixture of 16.3 g of lignin, 225 g of TCC, and 1.00 g of DBU was stirred at 170 °C for 12 h. A highly viscous resin with multiple cyclic carbonate functionalities and highly increased molar mass was obtained. See SEC elugram in Fig. 1b.

### Example 18

A mixture of 19.2 g of lignin, 183 g of CSBO, and 1.00 g of DBU was stirred at 170 °C for 12 h. A viscous resin with multiple cyclic carbonate functionalities and increased molar mass was obtained.

### Example 19

In a series of experiments, the mass ratios of the constituents in a mixture of lignin, BCC and DBU were varied (10 g of lignin, from 50 g to 150 g of BCC, and from 0.2 g to 0.6 g of DBU). All products obtained were viscous fluids with increased molar masses and feature multiple cyclic carbonate functionalities. It could be shown that the viscosity depends on the mass ratio of the constituents of the starting mixture. The lower the amount of BCC, the higher was the viscosity of the product.

### Example 20

A mixture of 20 g of lignin, 200 g of BCC, and 5.5 g of DBU was stirred at 160 °C for 6 h. A highly viscous resin with multiple cyclic carbonate functionalities and highly increased molar mass was obtained.

### Example 21

A mixture of 20 g of lignin, 200 g of CSBO, and 5.5 g of DBU was stirred at 160 °C for 6 h. A highly viscous resin with multiple cyclic carbonate functionalities and highly increased molar mass was obtained.

### Example 22 SEC analysis of carbonate modified lignin prepolymer synthesis

The carbonate modified lignin prepolymer products obtained by single step synthesis were examined by size-exclusion chromatography (SEC). The elugrams in Figures 1a and 1b show that the molar mass of the products is several times higher than the molar mass of the lignin starting compound. Accordingly, it can be assumed that individual lignin molecules have reacted with multifunctional carbonates to form lignin-based higher molar mass oligomers. These highly viscous resins serve as prepolymers for further reactions in the following examples and are hereinafter referred to as "lignin prepolymers".

### Examples with novolak and carbonate modified lignin prepolymers

In these examples, the remaining cyclocarbonate groups of the "lignin prepolymers" react also with the novolak in the presence of the catalyst (DBU) and thereby lead to crosslinking of the mixtures.

### Example 23

A mixture of 1.0 g of novolak, 1.0 g of lignin prepolymers, and 20 mg of DBU was completely cured at 220 °C for 30 min. The obtained products showed low solubility in water, ethanol, DMSO and acetone. The differential scanning calorimetry (DSC) thermogram of a corresponding mixture shows an exothermic signal in a temperature range from 190 °C to 240 °C.

### Example 24

A mixture of 1.0 g of novolak, 1.0 g of lignin prepolymers, and 40 mg of DBU was completely cured at 220 °C for 30 min. The obtained products showed low solubility in water, ethanol, DMSO and acetone. The DSC thermogram of a corresponding mixture shows an exothermic signal in a temperature range from 180 °C to 230 °C.

### Example 25

A mixture of 1.0 g of novolak and 1.0 g of lignin prepolymers without addition of catalyst (DBU) was completely cured at 220 °C for 30 min. The obtained products showed low solubility in water, ethanol, DMSO and acetone. The DSC thermogram of a corresponding mixture shows an exothermic signal in a temperature range from 190 °C to 240 °C.

### Examples with lignin and carbonate modified lignin prepolymers

### Example 26

A mixture of 1.0 g of lignin prepolymer, 1.0 g of unmodified lignin, 1.0 g of TCC, and 0.1 g of tetra-n-butylammoniumbromide ("TBAB") was completely cured by heating to 170 °C for 9 min. Adhesive strength tests with corresponding mixtures showed very good results. Further details regarding adhesive strength tests can be found in table 5.

### Example 27

A mixture of 1.0 g of lignin prepolymer, 1.0 g of unmodified lignin, 1.5 g of TCC, 1.0 g of soy protein isolate ("SPI"), 0.5 g of adipic acid, and 0.2 g of KOH was completely cured by heating to 170 °C for 9 min. Adhesive strength tests with corresponding mixtures showed good results. Further details regarding adhesive strength tests can be found in table 5.

### Example 28

A mixture of 1.5 g of lignin prepolymer, 1.0 g of unmodified lignin, 1.5 g of TCC, 1.0 g of chickpea flour ("KEM"), and 0.2 g of KOH was completely cured by heating to 170 °C for 9 min. Adhesive strength tests with corresponding mixtures showed good results. Further details regarding adhesive strength tests can be found in table 5.

### Example 29

A mixture of 5.0 g of lignin prepolymer, 5.0 g of unmodified lignin, and 5.0 g of TCC was completely cured by heating to 180 °C for 17 min. Adhesive strength tests showed very good results. Further details regarding adhesive strength tests can be found in table 5.

### Example 30

A mixture of 0.5 g of lignin prepolymer, 0.5 g of unmodified lignin, and 0.5 g of CSBO was completely cured by heating to 190 °C for 2 h. Adhesive strength tests showed good results.

### Example 31

A mixture of 1.0 g of lignin prepolymer, 1.0 g of BCC, 1.0 g of SPI and 40 mg of DBU was completely cured by heating to 180 °C for 30 min. Adhesive strength tests with corresponding mixtures showed good results.

### Example 32

A mixture of 1.0 g of lignin prepolymer, 1.0 g of BCC and 1.0 g of SPI was completely cured by heating to 180 °C for 30 min. Adhesive strength tests with corresponding mixtures showed good results.

### Examples with tannin and carbonate modified lignin prepolymers

### Example 33

A mixture of 1.0 g of lignin prepolymer, 1.0 g of unmodified tannin, 1.0 g of TCC, and 0.4 g of DBU was completely cured by heating to 190 °C for 30 min. The DSC thermogram of a corresponding mixture showed an exothermic signal in a temperature range from 130 °C to 230 °C.

### Example 34

A mixture of 1.0 g of lignin prepolymer, 1.0 g of unmodified tannin, 1.0 g of TCC, and 0.2 g of DBU was completely cured by heating to 190 °C for 30 min. The DSC thermogram of a corresponding mixture shows an exothermic signal in a temperature range from 140 °C to 240 °C.

### Example 35

A mixture of 1.0 g of lignin prepolymer, 1.0 g of unmodified tannin, 1.0 g of BCC, and 0.4 g of DBU was completely cured by heating to 190 °C for 30 min. The DSC thermogram of a corresponding mixture shows an exothermic signal in a temperature range from 130 °C to 230 °C.

### Example 36

A mixture of 1.0 g of lignin prepolymer, 1.0 g of unmodified tannin, and 1.0 g of BCC was completely cured without addition of catalyst by heating to 190 °C for 30 min. The DSC thermogram of a corresponding mixture shows an exothermic signal in a temperature range from 140 °C to 240 °C.

### Examples with variation of the amount of the catalyst

### Example 37

In a series of experiments, the amount of the catalyst DBU was varied from 0 g to 0.40 g in a mixture of 0.10 g of lignin and 0.15 g of TCC. The DSC thermograms show a significant dependence on the amount of the catalyst. The higher the amount of the catalyst, the lower is the temperature of the exothermic signals indicating the crosslinking reaction. The exothermic DSC signals range from 130 °C to 240 °C. The intensity of the exothermic signals also increases with an increasing amount of catalyst. Further details concerning thermoanalytical investigations can be found in the corresponding section further below.

### Example 38

In a series of experiments, the amount of the catalyst DBU was varied from 0 g to 0.40 g in a mixture of 0.10 g of lignin and 0.15 g of BCC. The DSC thermograms show a significant dependence on the amount of the catalyst. The higher the amount of the catalyst, the lower is the temperature of the exothermic signals indicating the crosslinking reaction. The exothermic DSC signals range from 130 °C to 240 °C. The intensity of the exothermic signals also increases with an increasing amount of catalyst.

### Example 39

In a series of experiments, the amount of the catalyst DBU was varied from 0 g to 0.40 g in a mixture of 0.10 g of novolak and 0.15 g of TCC. The DSC thermograms show a significant dependency on the amount of the catalyst. The higher the amount of the catalyst, the lower is the temperature of the exothermic signals indicating the crosslinking reaction. The exothermic DSC signals range from 130 °C to 240 °C. The intensity of the exothermic signals also increases with an increasing amount of catalyst.

### Example 40

In a series of experiments, the amount of the catalyst DBU was varied from 0 g to 0.40 g in a mixture of 0.10 g of novolak and 0.15 g of BCC. The DSC thermograms show a significant dependence on the amount of the catalyst. The higher the amount of the catalyst, the lower is the temperature of the exothermic signals indicating the crosslinking reaction. The exothermic DSC signals range from 130 °C to 240 °C. The intensity of the exothermic signals also increases with an increasing amount of catalyst.

### Examples of solubility tests

It was tested under which conditions novolaks and lignin can be crosslinked with cyclic carbonates to form insoluble products. For this purpose, lignin, novolaks, cyclic carbonates (BCC, TCC and CSBO) and DBU were mixed in various proportions and combinations and heated at different temperatures.

The solvent DMSO was used for the solubility tests of the lignin-based products. It turned out that temperatures of at least 170 °C are necessary to obtain insoluble products from mixtures of lignin, cyclic carbonates (BCC and CSBO) and DBU under the tested conditions.

The solvents ethanol and acetone were used for the solubility tests of the novolak-based products. It has been found that mixtures of novolak, cyclic carbonates (BCC, TCC and CSBO) and DBU are converted to insoluble crosslinked products at temperatures of at least 150 °C under the given conditions. It also turned out that a mass fraction of CSBO of more than 50 % is necessary to obtain insoluble products from mixtures containing novolak and CSBO.

**Table 1: Examples of solubility tests in DMSO with mixtures of lignin, cyclic carbonates (BCC and CSBO) and DBU as function of mass m of components, reaction temperature Tᵣ and reaction time tᵣ**

| Test | *m*(Lignin) | *m*(BCC) | *m*(CSBO) | *M*(DBU) | *Tᵣ* | *t*ᵣ | solubility in DMSO |
|---|---|---|---|---|---|---|---|
| | g | g | g | g | °C | h | |
| Solubility-test-01 | 3.0 | 1.5 | - | 0.10 | 25 (RT) | 8 | soluble |
| Solubility-test-02 | 3.0 | 1.5 | - | 0.10 | 100 | 8 | soluble |
| Solubility-test-03 | 3.0 | 1.5 | - | 0.10 | 170 | 8 | insoluble |
| Solubility-test-04 | 2.3 | 2.3 | - | 0.10 | 170 | 8 | insoluble |
| Solubility-test-05 | 1.5 | 3.1 | - | 0.10 | 170 | 8 | insoluble |
| Solubility-test-06 | 0.75 | 1.5 | - | 0.054 | 150 | 1 | soluble |
| Solubility-test-07 | 0.77 | 1.5 | - | 0.053 | 170 | 1 | insoluble |
| Solubility-test-08 | 0.75 | 1.5 | - | 0.048 | 170 | 5 | insoluble |
| Solubility-test-09 | 0.79 | 1.6 | - | 0.046 | 170 | 8 | insoluble |
| Solubility-test-10 | 0.75 | - | 1.5 | 0.057 | 150 | 1 | soluble |
| Solubility-test-11 | 0.77 | - | 1.5 | 0.051 | 170 | 1 | soluble |
| Solubility-test-12 | 0.75 | - | 1.5 | 0.055 | 170 | 5 | insoluble |
| Solubility-test-13 | 0.77 | - | 1.6 | 0.05 | 170 | 8 | insoluble |

**Table 2: Examples of solubility tests in ethanol and acetone with mixtures of novolak, cyclic carbonates (BCC, TCC and CSBO) and DBU as function of mass m of components, reaction temperature Tᵣ and reaction time tᵣ**

| | *m*(DP114) | *m*(BCC) | *m*(TCC) | *m*(CSBO) | *m*(DBU) | *T*ᵣ | *t*ᵣ | solubility in | |
|---|---|---|---|---|---|---|---|---|---|
| | g | g | g | g | g | °C | h | ethanol | acetone |
| Solubility-test-14 | 1.0 | 1.0 | - | - | 0.15 | 120 | 1 | soluble | soluble |
| Solubility-test-15 | 1.0 | 1.0 | - | - | 0.15 | 130 | 1 | soluble | soluble |
| Solubility-test-16 | 1.0 | 1.0 | - | - | 0.15 | 140 | 1 | soluble | soluble |
| Solubility-test-17 | 1.0 | 1.0 | - | - | 0.15 | 150 | 1 | insoluble | insoluble |
| Solubility-test-18 | 1.0 | 1.0 | - | - | 0.15 | 160 | 1 | insoluble | insoluble |
| Solubility-test-19 | 1.0 | 1.0 | - | - | 0.15 | 170 | 1 | insoluble | insoluble |
| Solubility-test-20 | 1.0 | 1.0 | - | - | 0.15 | 180 | 1 | insoluble | insoluble |
| Solubility-test-21 | 1.0 | 1.0 | - | - | 0.15 | 190 | 1 | insoluble | insoluble |
| Solubility-test-22 | 1.0 | 1.0 | - | - | 0.15 | 200 | 1 | insoluble | insoluble |
| Solubility-test-23 | 1.0 | 1.0 | - | - | 0.15 | 210 | 1 | insoluble | insoluble |
| Solubility-test-24 | 1.0 | 1.0 | - | - | 0.15 | 220 | 1 | insoluble | insoluble |
| Solubility-test-25 | 0.80 | 1.2 | - | - | 0.15 | 200 | 2 | insoluble | insoluble |
| Solubility-test-26 | 0.90 | 1.1 | - | - | 0.15 | 200 | 2 | insoluble | insoluble |
| Solubility-test-27 | 0.95 | 1.05 | - | - | 0.15 | 200 | 2 | insoluble | insoluble |
| Solubility-test-28 | 1.0 | 1.0 | - | - | 0.15 | 200 | 2 | insoluble | insoluble |
| Solubility-test-29 | 1.05 | 0.95 | - | - | 0.15 | 200 | 2 | insoluble | insoluble |
| Solubilily-test-30 | 1.1 | 0.9 | - | - | 0.15 | 200 | 2 | insoluble | insoluble |
| Solubility-test-31 | 1.2 | 0.8 | - | - | 0.15 | 200 | 2 | insoluble | insoluble |
| Solubility-test-32 | 0.80 | - | 1.2 | - | 0.15 | 200 | 2 | insoluble | insoluble |
| Solubility-test-33 | 0.90 | - | 1.1 | - | 0.15 | 200 | 2 | insoluble | insoluble |
| Solubility-test-34 | 0.95 | - | 1.05 | - | 0.15 | 200 | 2 | insoluble | insoluble |
| Solubility-test-35 | 1.0 | - | 1.0 | - | 0.15 | 200 | 2 | insoluble | insoluble |
| Solubility-test-36 | 1.05 | - | 0.95 | - | 0.15 | 200 | 2 | insoluble | insoluble |
| Solubility-test-37 | 1.1 | - | 0.90 | - | 0.15 | 200 | 2 | insoluble | insoluble |
| Solubility-test-38 | 1.2 | - | 0.80 | - | 0.15 | 200 | 2 | insoluble | insoluble |
| Solubility-test-39 | 0.80 | - | - | 1.2 | 0.15 | 200 | 2 | soluble | soluble |
| Solubility-test-40 | 0.90 | - | - | 1.1 | 0.15 | 200 | 2 | soluble | soluble |
| Solubility-test-41 | 0.95 | - | - | 1.05 | 0.15 | 200 | 2 | soluble | soluble |
| Solubility-test-42 | 1.0 | - | - | 1.0 | 0.15 | 200 | 2 | soluble | soluble |
| Solubility-test-43 | 1.05 | - | - | 0.95 | 0.15 | 200 | 2 | insoluble | insoluble |
| Solubility-test-44 | 1.1 | - | - | 0.90 | 0.15 | 200 | 2 | insoluble | insoluble |
| Solubility-test-45 | 1.2 | - | - | 0.80 | 0.15 | 200 | 2 | insoluble | insoluble |

### Examples of adhesive screening tests

Adhesive tests of different mixtures were carried out in a screening process using beech wood specimens. For this purpose, the adhesive mixtures were applied to two wooden test pieces each, which were then pressed together and heated in the oven at 190 °C for two hours. The strength of the bond was tested manually after a cooling phase of two hours.

It has been shown that mixtures with novolaks and cyclic carbonate with a mass fraction of carbonate of from about 50 % to 60 % resulted in the highest bond strengths (Table 3). Furthermore, it was found that the adhesive strength of the mixtures depends on the DBU concentration. Mixtures of novolaks, cyclic carbonates and a mass fraction of DBU of 7.5 % resulted in significantly higher strengths than corresponding mixtures with mass fractions of DBU of 0.25 % (Table 4). This result corresponds to the results of the thermoanalytical investigations. Both methods show that the crosslinking process is significantly influenced by the amount of catalyst.

Further screening tests showed that mixtures of lignin prepolymer, lignin and cyclic carbonates led to excellent results in terms of adhesive strength (Table 5). It could also be shown that the addition of novolaks, chickpea flour ("KEM"), soy protein isolate ("SPI"), adipic acid (in aqueous solution) or glutaric acid (in aqueous solution) also gave excellent results.

**Table 3: Examples of adhesive strength pretests with mixtures of Novolak DP 114, cyclic carbonates (BCC, TCC or CSBO) and additional DBU catalyst as function of the mass of these components**

| | DP 114 | BCC | TCC | CSBO | Catalyst | Adhesion |
|---|---|---|---|---|---|---|
| | *m*(DP114)/g | *m*(BCC)/g | m(TCC)/g | *m*(CSBO)/g | *m*(DBU)/g | manual inspection |
| Pretest-01 | 100 | 0 | - | - | 0.25 | none |
| Pretest-02 | 65 | 35 | - | - | 0.25 | good |
| Pretest-03 | 60 | 40 | - | - | 0.25 | good |
| Pretest-04 | 55 | 45 | - | - | 0.25 | good |
| Pretest-05 | 50 | 50 | - | - | 0.25 | excellent |
| Pretest-06 | 45 | 55 | - | - | 0.25 | excellent |
| Pretest-07 | 40 | 60 | - | - | 0.25 | excellent |
| Pretest-08 | 35 | 65 | - | - | 0.25 | good |
| Pretest-09 | 0 | 100 | - | - | 0.25 | none |
| Pretest-10 | 100 | - | 0 | - | 0.25 | none |
| Pretest-11 | 65 | - | 35 | - | 0.25 | none |
| Pretest-12 | 60 | - | 40 | - | 0.25 | good |
| Pretest-13 | 55 | - | 45 | - | 0.25 | good |
| Pretest-14 | 50 | - | 50 | - | 0.25 | good |
| Pretest-15 | 45 | - | 55 | - | 0.25 | good |
| Pretest-16 | 40 | - | 60 | - | 0.25 | excellent |
| Pretest-17 | 35 | - | 65 | - | 0.25 | good |
| Pretest-18 | 0 | - | 100 | - | 0.25 | none |
| Pretest-19 | 100 | - | - | 0 | 0.25 | none |
| Pretest-20 | 65 | - | - | 35 | 0.25 | none |
| Pretest-21 | 60 | - | - | 40 | 0.25 | none |
| Pretest-22 | 55 | - | - | 45 | 0.25 | none |
| Pretest-23 | 50 | - | - | 50 | 0.25 | none |
| Pretest-24 | 45 | - | - | 55 | 0.25 | none |
| Pretest-25 | 40 | - | - | 60 | 0.25 | excellent |
| Pretest-26 | 35 | - | - | 65 | 0.25 | good |
| Pretest-27 | 0 | - | - | 100 | 0.25 | none |

**Table 4: Examples of adhesive strength pretests with mixtures of Novolak DP 114, carbonates (BCC or TCC) and additional DBU catalyst as function of the mass of these components**

| Test Code | Novolak | BCC | TCC | Catalyst | Adhesive Strength |
|---|---|---|---|---|---|
| | *m*(DP 114)/g | *m*(BCC)/g | *m*(TCC)/g | *m*(DBU)/g | (Manual Inspection) |
| Pretest-28 | 40 | 60 | - | 7.5 | excellent |
| Pretest-29 | 45 | 55 | - | 7.5 | excellent |
| Pretest-30 | 47.5 | 52.5 | - | 7.5 | excellent |
| Pretest-31 | 50 | 50 | - | 7.5 | excellent |
| Pretest-32 | 55 | 45 | - | 7.5 | excellent |
| Pretest-33 | 35 | - | 65 | 7.5 | excellent |
| Pretest-34 | 40 | - | 60 | 7.5 | excellent |
| Pretest-35 | 42.5 | - | 57.5 | 7.5 | excellent |
| Pretest-36 | 45 | - | 55 | 7.5 | good |
| Pretest-37 | 50 | - | 50 | 7.5 | good |

**Table 5: Examples of adhesive strength pretests with mixtures of lignin prepolymer, carbonates (BCC, TCC and CSBO), lignin, novolak DP 114, chickpea flour KEM, soybean protein isolate SPI, adipic acid ADA, and glutaric acid GA as function of the mass of these components**

| Test Code pretest | lignin prepoly-met | BCC | TCC | CSBO | Lignin | Novolak | KEM | SPI | adipic acid | glutaric acid | Adhesion |
|---|---|---|---|---|---|---|---|---|---|---|---|
| | *m*(LP)/g | *m*(BCC) /g | *m*(TCC) /g | *m*(CSBO) /g | *m*(L)/g | *m*(N)/g | *m*(KEM) /g | *m*(SPI) /g | *m*(ADA) /g | *m*(GA) /g | |
| 38 | 50.5 | - | 10.0 | - | 39.5 | - | - | - | - | - | excellent |
| 39 | 33.4 | - | 33.4 | - | 33.2 | - | - | - | - | - | excellent |
| 40 | 28.2 | - | 31.3 | - | 40.5 | - | - | - | - | - | excellent |
| 41 | 39.1 | - | 27.2 | - | 33.7 | - | - | - | - | - | excellent |
| 42 | 21.0 | - | 20.0 | - | 20.0 | - | 20.2 | - | - | 18.9 | excellent |
| 43 | 20.7 | - | 20.4 | - | 21.1 | - | 19.5 | - | 18.4 | - | excellent |
| 44 | 11.0 | - | 29.1 | - | 17.6 | - | 22.8 | - | 19.5 | - | excellent |
| 45 | 31.5 | - | 11.8 | - | 19.2 | - | 18.0 | - | 19.5 | - | excellent |
| 46 | 9.7 | - | 21.4 | - | 19.6 | - | 30.3 | - | 19.0 | - | excellent |
| 47 | 19.6 | - | 16.8 | - | 16.8 | - | 19.2 | - | 27.5 | - | excellent |
| 48 | 22.5 | - | 22.2 | - | 17.3 | - | 20.7 | - | 17.4 | - | excellent |
| 49 | 25.1 | - | 25.1 | - | 25.9 | - | - | 23.9 | - | - | excellent |
| 50 | 33.9 | - | - | - | - | 33.0 | 33.1 | - | - | - | excellent |
| 51 | 34.0 | - | - | - | - | - | 33.3 | - | 32.7 | - | none |
| 52 | 51.2 | - | - | - | - | - | - | - | 48.8 | - | none |
| 53 | 35.5 | - | - | - | - | - | - | 32.0 | 32.4 | - | none |
| 54 | 50.0 | - | - | - | - | - | - | 25.6 | 24.4 | - | none |
| 55 | 49.7 | - | - | - | - | - | - | 50.3 | - | - | none |
| 56 | 36.9 | - | - | - | - | - | - | 30.2 | - | 32.9 | none |
| 57 | 50.8 | - | - | - | - | - | - | - | - | 49.2 | none |
| 58 | - | 49.6 | - | - | - | - | - | 50.4 | - | - | none |
| 59 | - | 51.1 | - | - | - | - | - | - | - | 48.9 | none |
| 60 | - | 51.3 | - | - | - | - | - | - | 48.7 | - | none |
| 61 | - | - | 48.9 | - | - | - | - | 51.1 | - | - | none |
| 62 | - | - | 19.1 | - | 25.9 | - | 25.8 | - | 29.2 | - | none |
| 63 | - | - | 20.6 | - | 25.8 | - | 27.7 | - | - | 26.0 | none |
| 64 | - | - | - | 50.7 | - | - | - | - | - | 49.3 | none |
| 65 | - | - | - | 49.9 | - | - | - | - | 50.1 | - | none |
| 66 | - | - | - | 49.4 | - | - | - | 50.6 | - | - | none |

## Claims

1. A curable mixture comprising at least one organic compound **O** having phenolic hydroxyl groups and at least one multifunctional cyclic organic carbonate **C** as crosslinking agent.

2. The curable mixture of claim 1 wherein the organic compound **O** having phenolic hydroxyl groups is a novolak **N,** a tannin **T,** or a lignin **L.**

3. The curable mixture of claim 2 wherein the novolak **N** is made by reaction of phenol C₆H₅OH and formaldehyde HCHO.

4. The curable mixture of claim 2 wherein the the novolak **N** is made by reaction of a mixture of phenol C₆H₅OH with at least one alkylphenol having from one to twenty carbon atoms in the alkyl group, and formaldehyde HCHO.

5. The curable mixture of claim 2 wherein the lignin **L** is selected from the group consisting of Kraft lignin, soda lignin, sulphite lignin, and organosolv lignin.

6. The curable mixture of any of claims 1 to 5 wherein the multifunctional cyclic organic carbonate **C** has at least two cyclocarbonate structures in its molecule, wherein the cyclocarbonate structures obey the formula I 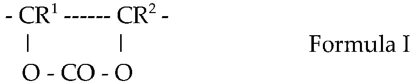 where R¹ and R² are independently of each other selected from the group consisting of H and alkyl groups having from one to six carbon atoms.

7. The curable mixture of any of claims 1 to 5 wherein the multifunctional cyclocarbonate **C** is a cyclocarbonate **C6** that has six ring atoms in the cyclocarbonate structure (1,3-dioxane-2-ones), as depicted in Formula II 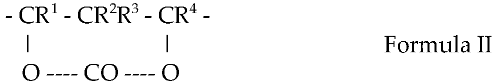 where each of R¹, R², R³ and R⁴ is independently selected from the group consisting of H and alkyl groups having from one to six carbon atoms.

8. The curable mixture of claim 6 wherein the multifunctional cyclic organic carbonate **C** is obtainable from a multifunctional epoxide **E** having at least two epoxide groups by insertion of carbon dioxide into multifunctional epoxides **E,** or by reaction of vicinal diols **D** having at least two sets of vicinal diol groups, with a dialkyl carbonate or a monofunctional cyclocarbonate.

9. The curable mixture of claim 8 wherein the epoxide **E** is selected from the group consisting of a novolak which is etherified with an average of at least two molecules of glycidol, an epoxy resin obtainable by reacting a multifunctional hydroxyaromatic compound with epichlorohydrin or with a multifunctional epoxide based on aromatic or aliphatic multifunctional hydroxy compounds, multifunctional epoxidised olefin oligomers or polymers, and multifunctional epoxidised vegetable oils, wherein the word multifunctional always means at least two functionalities.

10. The curable mixture of claim 8 wherein a multifunctional vicinal diol **D** is made from a lignin **L** or from a tannin **T** by reaction thereof with a hydroxyfunctional cyclic carbonate to lead to a bis(hydroxyalkyl) derivate having at least two bis(hydroxyalkyl) groups per molecule.

11. The curable mixture of claim 10 where the hydroxyfunctional cyclic carbonate is glycerol carbonate.

12. A method of curing the curable mixture of any of claims 1 to 11, which comprises reacting the said organic compound **O** having phenolic hydroxyl groups with at least one multifunctional cyclic organic carbonate **C** wherein the mass ratio *m*_{O}/*m*_{CC} is from 0.1 to 10, where *m*_{O} is the mass of the organic compound **O,** and *m*_{CC} is the mass of the multifunctional cyclocarbonates **CC** used.

13. Binders for coating compositions, adhesive compositions, or filler compositions comprising the curable mixture as claimed in any of claims 1 to 11.

## Patentansprüche

1. Vernetzbare Mischung enthaltend mindestens eine organische Verbindung O mit phenolischen Hydroxylgruppen und mindestes ein mehrfunktionelles cyclisches organisches Carbonat C als Vernetzungsmittel.

2. Vernetzbare Mischung gemäß Anspruch 1, **dadurch gekennzeichnet, dass** die organische Verbindung **O** mit phenolischen Hydroxylgruppen ein Novolak N, ein Tannin **T,** oder ein Lignin **L** ist**.**

3. Vernetzbare Mischung gemäß Anspruch 2, **dadurch gekennzeichnet, dass** der Novolak N hergestellt wird durch Reaktion von Phenol C₆H₅OH und Formaldehyd HCHO.

4. Vernetzbare Mischung gemäß Anspruch 2, **dadurch gekennzeichnet, dass** der Novolak N hergestellt wird durch Reaktion einer Mischung von Phenol C₆H₅OH mit mindestens einem Alkylphenol mit einem bis zwanzig Kohlenstoffatomen in der Alkylgruppe, und Formaldehyd HCHO.

5. Vernetzbare Mischung gemäß Anspruch 2, **dadurch gekennzeichnet, dass** das Lignin L ausgewählt ist aus der Gruppe von Kraft-Lignin, Sodalignin, Sulfitlignin und Organosolv-Lignin.

6. Vernetzbare Mischung gemäß einem der Ansprüche 1 bis 5, **dadurch gekennzeichnet, dass** das multifunktionelle cyclische organische Carbonat C mindestens zwei Cyclocarbonatstrukturen im Molekül enthält, wobei die Cyclocarbonatstrukturen der Formel I entsprechen 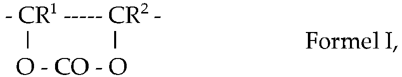 und R¹ und R² unabhängig voneinander ausgewählt sind aus der Gruppe umfassend H und Alkylgruppen mit einem bis sechs Kohlenstoffatomen.

7. Vernetzbare Mischung gemäß einem der Ansprüche 1 bis 5, **dadurch gekennzeichnet, dass** das multifunktionelle cyclische organische Carbonat **C** ein Cyclocarbonat **C6** mit 6 Ring-Atomen in der Cyclocarbonatstruktur (1,3-Dioxan-2-one) ist, wie in Formel II 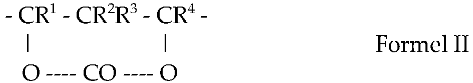 dargestellt, und jedes von R¹, R², R³ und R⁴ unabhängig voneinander ausgewählt ist aus der Gruppe umfassend H und Alkylgruppen mit einem bis sechs Kohlenstoffatomen.

8. Vernetzbare Mischung gemäß Anspruch 6, **dadurch gekennzeichnet, dass** das multifunktionelle cyclische organische Carbonat C erhältlich ist einem mehrfunktionellen Epoxid **E** mit mindestens zwei Epoxidgruppen pro Molekül durch Insertion von Kohlenstoffdioxid in multifunktionelle Epoxide **E,** oder durch Reaktion von vicinalen Diolen **D** mit mindestens zwei Einheiten von vicinalen Diolgruppen mit einem Dialkylcarbonat oder einem monofunktionellen Cyclocarbonat.

9. Vernetzbare Mischung gemäß Anspruch 8, **dadurch gekennzeichnet, dass** das Epoxid **E** ausgewählt ist aus einem mit mindestens zwei Molekülen Glycidol verätherten Novolak, einem Epoxidharz erhältlich durch Reaktion einer multifunktionellen hydroxyaromatischen Verbindung mit Epichlorhydrin oder mit einem multifunktionellen Epoxid basierend auf aromatischen oder aliphatischen multifunktionellen Hydroxyverbindungen, multifunktionellen epoxydierten Olefin-Oligomeren oder -Polymeren, und multifunktionellen epoxydierten Pflanzenölen, wobei das Wort multifunktionell stets für mindestens difunktionell steht.

10. Vernetzbare Mischung gemäß Anspruch 8, **dadurch gekennzeichnet, dass** ein multifunktionelles vicinales Diol **D** hergestellt wird aus einem Lignin **L** oder einem Tannin **T** durch deren Umsetzung mit einem hydroxyfunktionellen cyclischen Carbonat zu einem Bis(hydroxalkyl)derivat mit mindestens zwei Bis(hydroxyalkyl)-Gruppen pro Molekül.

11. Vernetzbare Mischung gemäß Anspruch 10, **dadurch gekennzeichnet, dass** das hydroxyfunktionelle cyclische Carbonat Glycerincarbonat ist.

12. Verfahren zur Härtung einer vernetzbaren Mischung gemäß einem der Ansprüche 1 bis 11, wobei die genannte organische Verbindung **O** mit phenolischen Hydroxylgruppen mit mindestens einem multifunktionellen cyclischen organischen Carbonat **C** umgesetzt wird, **dadurch gekennzeichnet, dass** das Massenverhältnis *m*_{O}/ *m*_{CC} von 0.1 bis 10 beträgt, wobei *m*_{O} die Masse der organischen Verbindung **O** ist, und *m*_{CC} die Masse der genutzten multifunktionellen Cyclocarbonate **CC** ist.

13. Bindemittel für Beschichtungsmittelzusammensetzungen, Klebstoffzusammensetzungen oder Füller-Zusammensetzungen enthaltend die vernetzbare Mischung gemäß einem der Ansprüche 1 bis 11.

## Revendications

1. Composition réticulable comprenant au moins un composé organique **O** ayant des groupes hydroxyle phénoliques, et au moins un carbonate cyclique organique multifonctionnel **C** comme agent réticulant.

2. Composition réticulable selon la revendication 1, où le composé organique **O** ayant des groupes hydroxyle phénoliques est un novolaque **N,** un tannin **T,** ou une lignine **L.**

3. Composition réticulable selon la revendication 2, où le novolaque **N** est préparé par la réaction de phénol C₆H₅OH et formaldéhyde HCHO.

4. Composition réticulable selon la revendication 2 où le novolaque N est préparé par la réaction d'un mélange de phénol C₆H₅OH et au moins un alkyphénol contenant d'un à vingt atomes de carbone, et formaldéhyde HCHO.

5. Composition réticulable selon la revendication 2 où la lignine **L** est sélectionnée dans le groupe de lignine Kraft, la lignine obtenue par traitement de la pâte à papier avec de la soude, la lignine obtenue par traitement de la pâte à papier avec une solution aqueuse contenant du sulfite, et la lignine issue du procédé Organosolv.

6. Composition réticulable selon une des revendications 1 à 5 où, dans une molécule de carbonate cyclique multifonctionnel **C,** il y a au moins deux structures cyclocarbonate qui repondent à la formule structurelle I, 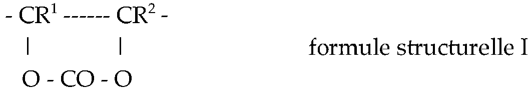 où R¹ et R² sont choisis, indépendamment, parmi H et les groupes alkyles comprenant de un à six atomes de carbone.

7. Composition réticulable selon une des revendications 1 à 5, où le carbonate cyclique multifonctionnel **C** est un cyclocarbonate **C6** à six atomes de carbone dans la structure cyclique de cyclocarbonate, qui repond à la formule structurelle II, 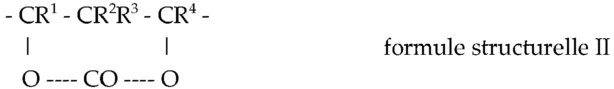 où chacun de R¹, R², R³, et R⁴ est choisi, indépendamment, parmi H et les groupes alkyles comprenant de un à six atomes de carbone.

8. Composition réticulable selon la revendication 6, où le carbonate cyclique multifonctionnel C peut être obtenu à partir d'un époxyde **E** multifonctionnel ayant au moins deux groupes époxy par insertion du dioxyde de carbone dans des époxydes **E,** ou par réaction des diols vicinals **D** avec au moins deux systèmes de diol vicinal avec un dialkylcarbonate ou un cyclocarbonate monofonctionnel.

9. Composition réticulable selon la revendication 8, où l'époxide **E** est choisi parmi un novolaque étherifié avec au moins deux molécules de glycidol, une résine époxy préparé par réaction d'un composé hydroxyaromatique multifonctionnel avec de l'épichlorhydrine ou avec un époxyde multifonctionnel à base de composés multifonctionnels hydroxylés aromatiques ou aliphatiques, des oligomères ou polymères oléfiniques multifonctionnels époxydés, et des huiles végétales époxydés, le mot multifonctionnel signifiant ayant au moins deux fonctionnalités.

10. Composition réticulable selon la revendication 8, où un diol multifonctionnel vicinal **D** est obtenu à partir d'une lignine **L** ou d'un tannin **T** par réaction avec un carbonate cyclique hydroxylé pour former un composé dérivé bis(hydroxyalkylique) qui comprend au moins deux groupes bis(hydroxyalkyliques) par molécule.

11. Composition réticulable selon la revendication 10, où le carbonate cyclique hydroxylé est le carbonate de glycérine.

12. Procédé de durcissement de la composition réticulable selon une des revendications 1 à 11, comprenant faire réagir ledit composé organique **O** ayant des groupes hydroxyles phénoliques avec au moins un carbonate cyclique organique multifonctionnel **C** où la proportion *m*_{O}/*m*_{CC} est de 0.1 à 10, *m*_{O} signifiant la masse du ledit composé organique **O,** et *m*_{CC} signifiant la masse des carbonates cycliques organiques **CC** utilisées.

13. Liants pour agents de revêtement, pour adhésifs, et pour charges comprenant la composition réticulable selon une des revendications 1 à 11.
